# EUROPEAN PATENT SPECIFICATION

(11) **EP 4 431 258 B1**
(45) Date of publication and mention of the grant of the patent: **18.11.2026**
(21) Application number: 24163985.5
(22) Date of filing: 15.03.2024
(51) Int. Cl.: B29C 44/04, B29C 41/18, B29C 44/06, B29C 44/08

(54) **RESIN-BASED COMPOSITIONS FOR SLUSH MOLDING AND COMPOSITE PARTS MANUFACTURED THEREFROM**
ZUSAMMENSETZUNGEN AUF HARZBASIS ZUM SCHLICKERGIESSEN UND DARAUS HERGESTELLTE VERBUNDTEILE
COMPOSITIONS À BASE DE RÉSINE POUR MOULAGE PAR EMBOUAGE ET PIÈCES COMPOSITES FABRIQUÉES À PARTIR DE CELLES-CI

(30) Priority: 16.03.2023 US 202318122303
(43) Date of publication of application: 18.09.2024
(73) Proprietor: CpK Interior Products Inc., Port Hope, ON L1A 3W5 (CA)
(72) Inventor: FARRAR, Gregory James, Port Hope, L1A 1C4 (CA); REDDY, Murali Mohan, Port Hope, L1A 1C4 (CA)
(74) Representative: August Debouzy

(56) References cited:
- EP-A1- 3 992 244
- WO-A1-02/090080
- WO-A1-03/033589
- WO-A2-2021/239883
- GB-A- 1 368 743
- GB-A- 2 466 432
- US-A- 5 580 501
- US-A1- 2003 109 601
- US-B1- 6 516 736

## Description

### BACKGROUND

The present disclosure relates generally to resin-based compositions for manufacturing composite parts via slush-molding.

Soft skins used in automotive interiors, such as for instrument panels, door uppers, consoles, and the like, are oftentimes made using a slush molding process. During slush molding, a powder resin is introduced into a heated mold, which is rotated to distribute the powder resin over a surface of the mold. While the mold is rotating, at least a portion of the powder resin melts and then solidifies to forms a skin layer of solidified resin on the surface of the mold having a desired shape. During the slush molding process, it is important that the powder resin flows smoothly within the mold and uniformly coats the surface of the mold such that a uniform skin layer is formed. Polyvinyl chloride (PVC)-based resins used in slush molding oftentimes have an amorphous microstructure and exhibit good flowability for slush molding. Thermoplastic polyolefin (TPO)-based resins are desirable candidates for use in manufacturing skins for automotive interiors, but the pulverization techniques used to form the TPO-based resins into powders may produce powders having hooks and tails and may exhibit poor flowability for slush molding, which in turn may lead to higher scrap rates and an undesirable appearance.

Skin layers formed via slush molding are usually combined with an underlying foam layer to produce a composite part having a Class A surface and desired haptics, or a desired sense of touch and feel. Such desired haptics include softness, compressibility and flexibility of the Class A surface. The foam layer may be formed by a foam-in-place process in which, after the skin layer is formed, foam is injected and/or foamed between the skin layer and a hard substrate. In some cases, a sheet including a skin layer and a foam layer bonded to one another is cut to a desired size and shape from a calendar roll and then bonded to a rigid substrate, for example, via an adhesive. Such processes are time consuming and oftentimes lead to undesirable amounts of scrap, for example, in some instances, up to 40% of the materials used during the manufacturing process may result in scrap.

The underlying foam layer in automotive interiors is oftentimes made of polyurethane and the skin layer is made of polyvinyl chloride, a thermoplastic polyurethane, or a thermoplastic polyolefin. Thermoplastic polyolefins, however, are nonpolar, have low surface tension, and thus generally lack adhesion to polar materials, such as polyurethane. To ensure good bonding between the TPO skin layer and the polyurethane foam layer, secondary processes such as flame treating or application of adhesives or primer solutions containing polar compounds may be used to increase adhesion, which disadvantageously requires an additional processing step with the associated cost thereof. In addition, when the foam layer is made of polyurethane, instead of PVC or TPO like the skin layer, the resulting composite part and scrap materials are generally not recyclable.

It is therefore desirable to develop a method that can be used to form composite parts including a skin layer and an underlying foam layer bonded thereto that generates less scrap. In addition, it is desirable for the composite parts formed from such method to be recyclable. Furthermore, the composite parts should meet certain stringent criteria, including exceptional color stability and mechanical stability at high temperatures and after prolonged exposure to visible and ultraviolet light.

WO03/033589A1 discloses a polyolefin composition in powder form comprising (i) a crosslinkable, vinyl silane-grafted blend of a olefinic interpolymer, optionally containing a crystalline polypropylene homopolymer or interpolymer; and (ii) a crosslinked vinyl silane- grafted olefinic interpolymer containing a cure or crosslinking catalyst; said blend optionally containing a crystalline polyolefin powder. US2003/0109601A1 discloses a method and apparatus for slush molding a thin shell, and, more particularly, for slush molding a thin shell having an outer layer and an inner layer.

### SUMMARY

A composite part manufactured via a dual cast slush molding technique includes a skin layer having a first side and an opposite second side and a foam layer formed in situ on the second side of the skin layer. The first side of the skin layer defines a Class A surface. The skin layer and the foam layer each comprise a polymer of the same type and are respectively formed from a first resin-based composition and a second resin-based composition of the same type, meaning that the first resin-based composition comprises at least one polymer or at least one polymer having a monomer unit of the same type as that in the second resin-based composition. The skin layer and the foam layer are chemically bonded to each other along an interface therebetween without use of an adhesive. The first resin-based composition and the second resin-based composition each may comprise a polyvinyl chloride (PVC)-based composition or a thermoplastic polyolefin (TPO)-based composition as defined in claim 10.

In a method of manufacturing the composite part, as defined in claim 1, the first resin-based composition is introduced into a heated mold cavity defined by a mold surface, wherein the first resin-based composition melts and forms a skin layer on the mold surface. Then, the second resin-based composition is introduced into the heated mold cavity and heated such that the second resin-based composition melts and forms a foam layer on the mold surface over the skin layer. During formation of the foam layer, chemical bonds forms between the skin layer and the foam layer that join the skin layer and the foam layer together. Composite parts manufactured by the presently disclosed methods require fewer process steps, generate less scrap material, and can be more readily recycled than composite parts that include a skin layer and a foam layer made from different types of polymers.

Additional features and advantages can be ascertained from the following description and appended claims taken in conjunction with the accompanying drawings.

### BRIEF DESCRIPTION OF THE DRAWINGS

Figure 1 is a schematic isometric view of an interior panel of an automotive vehicle.
Figure 2 is a schematic cross-sectional view of the interior panel of Figure 1, taken along line 2 - 2, wherein the interior panel comprises a skin layer and a foam layer mounted to a rigid substrate.
Figure 3 is a process flow diagram of a method of manufacturing a PVC-based composition for a slush molding process.
Figure 4 is a process flow diagram of a method of manufacturing a TPO-based composition for a slush molding process.

### DETAILED DESCRIPTION

The presently disclosed resin-based compositions are formulated for use in the manufacture of composite parts via slush molding processes that include two stages or two casting steps. In a first step, a first resin-based composition is cast in a mold and heated to form a skin layer on a negative side of the mold. In a second step, a second resin-based composition is cast in the mold over the skin layer and heated to form a foam layer on the negative side of the mold over the skin layer. The first and second resin-based compositions both comprise the same type of base resin such that, during casting of the foam layer, a chemical bond forms between the skin layer and the foam layer that joins the skin layer and the foam layer together. The first and second resin-based compositions can be used to form composite parts including a skin layer and a foam layer that are joined together without use of adhesives or secondary process steps, and without requiring an additional step of bonding the skin layer and the foam layer together after formation thereof. In addition, because the first and second resin-based compositions are both made of the same type of base resin, composite parts manufactured therefrom generate less scrap material and can be more readily recycled than composite parts that include a skin layer and a foam layer made from different types of base resins. In practice, the presently disclosed resin-based compositions may be prepared in the form of powders having a fine, uniform particle size and thus, exhibit good flowability during the slush molding process, which may help ensure the formation of uniform skin and foam layers.

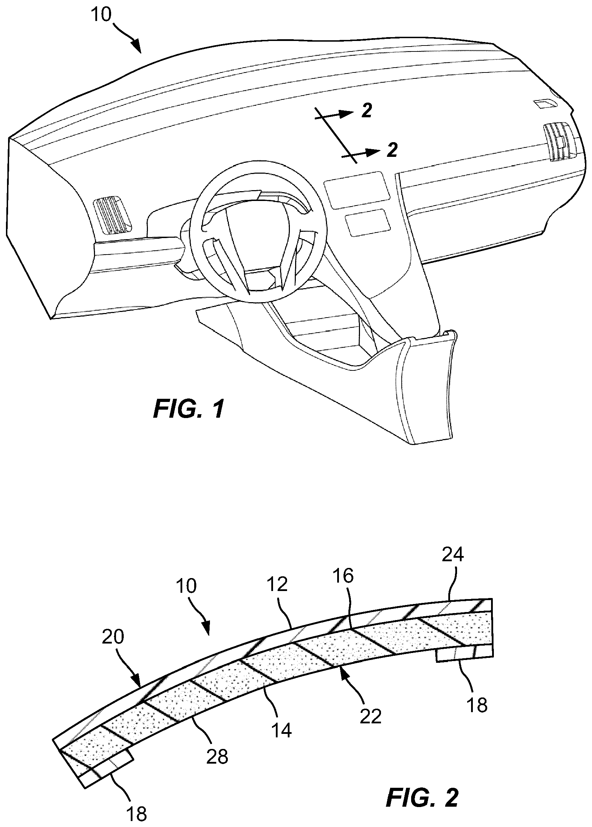

Figures 1 and 2 depict a composite part 10 that may be formed using a dual cast slush molding process. For example, the composite part 10 may be manufactured using the systems, apparatuses, and/or methods described in commonly owned U.S. Patent Application Number 18/094,499 filed January 9, 2023, and titled "Dual Cast Slush Mold System, Methods, and Apparatuses". As shown in Figure 2, the composite part 10 comprises a skin layer 12 and a foam layer 14 bonded together along an interface 16 between the skin layer 12 and the foam layer 14. In practice, the skin layer 12 and/or the foam layer 14 may be mounted to a rigid substrate 18.

The composite part 10 depicted in Figure 1 is in the form of an interior panel, specifically, an instrument panel and/or center floor-mounted console for an automotive vehicle; however, the present disclosure is not limited thereto. For example, the presently disclosed resin-based compositions may be used in slush molding processes to manufacture composite parts exhibiting any desired shape. Examples of composite parts that may be manufactured using the presently disclosed resin-based compositions include interior components of automotive vehicles, for example, A-pillars, B-pillars, C-pillars, steering wheel skins, airbag covers, seamless airbag doors, door trim panels, door handles, pillar handles, roof handles, knee bolsters, seat mechanism covers, sun visors, and the like. In addition, the presently disclosed resin-based compositions may be used in slush molding processes to manufacture composite parts for other industries, including furniture, bus and train seats, toys, shoes, household goods, and components therefor.

Referring again to Figure 2, the skin layer 12 has a first side 20 and an opposite second side 22. The first side 20 of the skin layer 12 defines an exterior surface 24 of the composite part 10. In aspects, the exterior surface 24 defined by the first side 20 of the skin layer 12 is a Class A surface. The skin layer 12 may have a thickness of greater than or equal to about 0.5 millimeters (mm) to less than or equal to about 3 mm or about 1 mm. In one configuration, the skin layer 12 has a thickness of about 0.6 mm. The skin layer 12 is preferably nonporous. In aspects where the skin layer 12 is made of a PVC-based composition, the skin layer 12 preferably has a density of greater than or equal to about 1.15 grams per cubic centimeter (g/cm³) to less than or equal to about 1.2 g/cm³. In one configuration, the skin layer 12 is made of a PVC-based composition and has a density of about 1.15 g/cm³. In aspects where the skin layer 12 is made of a TPO-based composition, the skin layer 12 preferably has a density of greater than or equal to about 0.8 g/cm³, or optionally about 0.89 g/cm³, to less than or equal to about 0.92 g/cm³. In one configuration, the skin layer 12 is made of a TPO-based composition and has a density of about 0.892 g/cm³.

The foam layer 14 is formed on the second side 22 of the skin layer 12 and defines an inner surface 28 of the composite part 10. The foam layer 14 may have a thickness of greater than or equal to about 2 mm, or optionally about 2.5 mm to less than or equal to about 5 mm, or optionally about 3 mm. In one embodiment, the foam layer 14 has a thickness of about 3 mm. The foam layer 14 is porous with a density less than that of the skin layer 12. For example, the foam layer 14 may have a density of greater than or equal to about 0.17 g/cm³ to less than or equal to about 0.5 g/cm³. In one configuration, the foam layer 14 has a density of about 0.2 g/cm³.

It is noteworthy that during formation of the foam layer 14 on the second side 22 of the skin layer 12, chemical bonds form between the skin layer 12 and the foam layer 14. The strength of the bond formed between the skin layer 12 and the foam layer 14 during manufacture thereof may be greater than or equal about 30 Newtons per centimeter (N/cm), optionally greater than or equal to about 40 N/cm, or optionally about 45 N/cm, as measured by 90° peel testing on a tensile compression testing machine. The strength of the adhesive bond formed along the interface 16 between the skin layer 12 and the foam layer 14 is preferably at least as strong as the cohesive bonds respectively formed within the skin layer 12 and the foam layer 14. As such, when the composite part 10 is subjected to adhesion testing, cohesive failure may occur within the skin layer 12 or the foam layer 14 itself and adhesive failure may not occur along the interface 16 between the skin layer 12 and the foam layer 14.

The skin layer 12 and the foam layer 14 may be respectively formed from a first resin-based composition and a second resin-based composition. And the skin layer 12 may have substantially the same composition as that of the first resin-based composition and the foam layer 14 may have substantially the same composition as that of the second resin-based composition. The first and second resin-based compositions each may comprise a base resin and a stabilizer mixture. In addition to the base resin and the stabilizer mixture, the first resin-based composition used to form the skin layer 12 may comprise an inorganic filler. In addition to the base resin and the stabilizer mixture, the second resin-based composition used to form the foam layer 14 preferably comprises a foaming agent and an activator. The amounts of each component in the first and second resin-based compositions may in some instances be calculated based on and/or described with reference to the amount of the base resin in the compositions. For example, each component may be present in the first and second resin-based compositions in an amount per one hundred (100) parts resin (phr), wherein the 100 parts resin refers to 100 parts, by weight, of the base resin.

The base resin of the first resin-based composition and of the second resin-based composition may comprise a thermoplastic polymer or a mixture of thermoplastic polymers. In any case, the base resins of the first and second resin-based compositions, according to the invention, are of the "same type," meaning that the base resins of the first and second resin-based compositions, according to the invention, comprise at least one polymer of the same type or at least one polymer having a monomer unit of the same type. One type of polymer is polyvinyl chloride (PVC). Other types of polymers are polypropylene and polyethylene. One type of monomer unit is vinyl chloride. Other types of monomer units are propylene, ethylene, 1-octene, styrene, and vinyl acetate. In some embodiments, the base resins of the first and second resin-based compositions each may comprise polyvinyl chloride and/or a copolymer including a vinyl chloride monomer unit (a PVC copolymer). One example of a PVC copolymer is polyvinyl chloride acetate (PVCA), which is a copolymer of vinyl chloride and vinyl acetate monomer units. In some aspects, the base resins of the first and second resin-based compositions each may comprise polypropylene and/or a copolymer including a propylene monomer unit (a propylene copolymer). In some aspects, the base resins of the first and second resin-based compositions each may comprise polyethylene and/or a copolymer including an ethylene monomer unit (an ethylene copolymer). One example of an ethylene copolymer is ethylene-1-octene. When the base resin of the first and/or second resin-based composition comprises a copolymer, the copolymer may be a linear copolymer with alternating copolymers, statistical copolymers, or block copolymers or a branched copolymer.

The composite part 10 is formed via a slush molding process that includes multiple stages or steps, and more desirably includes two stages or two casting steps. In a first step, the first resin-based composition is introduced into or cast in a heated mold cavity defined by a mold surface. The mold surface of the mold cavity is a negative of the exterior surface 24 of the composite part 10 being formed. When the first resin-based composition is introduced into the heated mold cavity, the first resin-based composition melts and forms the skin layer 12 on the mold surface of the mold cavity. In a second step, the second resin-based composition is introduced into or cast in the heated mold cavity, wherein the second resin-based composition melts and forms the foam layer 14 on the mold surface of the mold cavity over the skin layer 12. During formation of the foam layer 14, chemical bonds form between the skin layer 12 and the foam layer 14 that join the skin layer 12 and the foam layer 14 together. The mold may be heated to a temperature of greater than or equal to about 235 degrees Celsius (°C) to less than or equal to about 240°C during formation of the skin layer 12. During formation of the foam layer 14, the mold may be heated to a temperature of greater than or equal to about 185°C to less than or equal to about 210°C. The skin layer 12 and the foam layer 14 may be cooled in the mold cavity a temperature less than or equal to about 50°C to form the composite part 10 prior to removing the composite part 10 from the mold cavity.

### PVC-Based Composition

In a first embodiment, the first and second resin-based compositions each comprise a PVC-based composition, as defined in claim 1. In such case, the first resin-based composition is referred to as a first PVC-based composition and the second resin-based composition may be referred to as a second PVC-based composition. The first and second PVC-based compositions used to respectively form the skin layer 12 and the foam layer 14 each may comprise a base resin, a plasticizer, a stabilizer mixture, an absorbent powder, and optionally a pigment. In addition, the first PVC-based composition used to form the skin layer 12 may comprise an inorganic filler and the second PVC-based composition used to form the foam layer 14 may comprise a foaming agent and an activator.

The base resin comprises particles of a PVC homopolymer or a copolymer including a vinyl chloride monomer unit. In an exemplary embodiment, the base resin comprises particles of a suspension grade PVC homopolymer, meaning that the PVC homopolymer is made by polymerizing droplets of vinyl chloride monomer suspended in water, which results in the formation of highly porous particles having a mean particle diameter of greater than or equal to about 20 micrometers to less than or equal to about 250 micrometers and a porosity of greater than or equal to about 0.31 and less than or equal to about 0.38. In aspects, the suspension grade PVC homopolymer particles may have a mean particle diameter of about 50 micrometers. The highly porous nature of the suspension grade PVC homopolymer particles enables the particles to absorb large amounts of plasticizer during manufacture of first and second PVC-based compositions. The PVC homopolymer may have an inherent viscosity of greater than or equal to about 1 deciliters per gram (dL/g) to less than or equal to about 1.04 dL/g and a K-value of greater than or equal to about 68 to less than or equal to about 70. The PVC-based composition may comprise about 100 phr of the one or more PVC homopolymers. One example of a commercially available PVC homopolymer is OxyVinyls^{®} 240F supplied by Oxy Vinyls, LP of Dallas, Texas. In aspects, the base resin of the PVC-based composition may constitute, by weight, greater than or equal to about 40%, optionally about 45%, or optionally about 50% to less than or equal to about 70%, optionally about 60%, or optionally about 55% of the PVC-based composition.

The plasticizer may be included in the PVC-based composition to provide the PVC-based composition as well as the skin layer 12 and the foam layer 14 of the composite part 10 with certain desirable characteristics. For example, the plasticizer may help control and/or adjust the thixotropic properties of the PVC-based composition. As another example, the plasticizer may impart certain desirable haptics to the composite part 10, including hardness or softness. The plasticizer may comprise a primary plasticizer and a secondary plasticizer.

The primary plasticizer may comprise a monomeric ester or a polymeric ester. Examples of primary plasticizers include adipates; C₈-, C₉-, C₁₀-, and/or C₁₁-phthalates; C₈-, C₉-, and/or C₁₀-trimellitates; polymerics (e.g., polyphthalates, polyadipates, and/or polytrimellitics); and combinations thereof. In aspects, the primary plasticizer may comprise a branched trimellitate ester with isononanol (C₉) termination (a triisononyl trimellitate, TINTM, CAS No. 53894-23-8). One example of a commercially available triisononyl trimellitate is Synplast TINTM Electrical from Geon Performance Solutions. The PVC-based composition may comprise greater than or equal to about 30 phr, or optionally about 45 phr, to less than or equal to about 90 phr of the primary plasticizer. In aspects, the primary plasticizer may constitute, by weight, greater than or equal to about 20% to less than or equal to about 60% of the PVC-based composition.

The first PVC-based composition used to manufacture the skin layer 12 may comprise greater than or equal to about 60 phr to less than or equal to about 90 phr of the primary plasticizer. For example, in some aspects, the first PVC-based composition may comprise about 75 phr of the primary plasticizer. The primary plasticizer may comprise, by weight, greater than or equal to about 30% to less than or equal to about 45% of the first PVC-based composition. For example, in aspects, the primary plasticizer may comprise, by weight, about 37% of the first PVC-based composition. The second PVC-based composition used to manufacture the foam layer 14 may comprise greater than or equal to about 50 phr to less than or equal to about 70 phr of the primary plasticizer. The primary plasticizer may comprise, by weight, greater than or equal to about 24% to less than or equal to about 35% of the second PVC-based composition.

The secondary plasticizer may comprise an oil-based material, e.g., a vegetable oil, petroleum oil, or a combination thereof. In aspects, the secondary plasticizer may comprise epoxidized soybean oil, CAS No. 8013-07-8. One example of a commercially available epoxidized soybean oil is Plas-Chek^{®} 775 from Valtris Specialty Chemicals. The PVC-based composition may comprise greater than or equal to about 1 phr to less than or equal to about 20 phr of the secondary plasticizer. In aspects, the PVC-based composition may comprise about 10 phr of the secondary plasticizer. In aspects, the secondary plasticizer may constitute, by weight, greater than or equal to about 0.5% to less than or equal to about 10% of the PVC-based composition.

The first PVC-based composition used to manufacture the skin layer 12 may comprise greater than or equal to about 5 phr to less than or equal to about 15 phr of the secondary plasticizer. For example, in aspects, the first PVC-based composition may comprise about 10 phr of the secondary plasticizer. The secondary plasticizer may comprise, by weight, greater than or equal to about 2% to less than or equal to about 10% of the first PVC-based composition. For example, in aspects, the secondary plasticizer may comprise, by weight, about 5% of the first PVC-based composition. The second PVC-based composition used to manufacture the foam layer 14 may comprise greater than or equal to about 1 phr to less than or equal to about 10 phr of the secondary plasticizer. The secondary plasticizer may comprise, by weight, greater than or equal to about 0.5% to less than or equal to about 5% of the second PVC-based composition.

The stabilizer mixture may comprise a mixture of materials and may be formulated to help provide the composite part 10 with good thermal stability and/or color retention. The stabilizer mixture may be formulated to help maintain the physical integrity of the composite part 10 and thereby help extend the usable life of the composite part 10. In the second PVC-based composition used to manufacture the foam layer 14, the heat stabilizer may help lower the activation energy of the foaming agent, thereby helping catalyze the generation of gas bubbles at relatively low temperatures. The stabilizer may comprise at least one of a heat stabilizer, an ultraviolet (UV) absorber, and a hindered amine light stabilizer (HALS).

The heat stabilizer may comprise a zinc-containing compound (e.g., zinc oxide), a barium-containing compound (e.g., a barium salt), optionally a solvent, optionally an antioxidant, and optionally an organophosphorus compound. The zinc-containing compound may constitute, by weight, about 5% to 10% of the heat stabilizer and the barium-containing compound may constitute, by weight, about 20% to 30% of the heat stabilizer. One example of a commercially available heat stabilizer is Therm-Chek^{®} RC79L from Valtris Specialty Chemicals. The PVC-based composition may comprise greater than or equal to about 1 phr or optionally about 2 phr to less than or equal to about 10 phr, or optionally about 6 phr, of the heat stabilizer. In some formulations, the PVC-based composition may comprise about 4 phr of the heat stabilizer. The heat stabilizer may constitute, by weight, greater than or equal to about 0.5% or optionally about 1% to less than or equal to about 5% or optionally about 3% of the PVC-based composition. In aspects, the heat stabilizer may constitute, by weight, about 2% of the PVC-based composition.

The UV absorber may be formulated to help absorb ultraviolet radiation applied to the composite part 10 to help prevent or inhibit degradation of the physical appearance and/or mechanical properties of the composite part 10. The UV absorber may comprise a benzotriazole, a benzophenone, benzoate, or a combination thereof. In aspects, the UV absorber comprises a benzotriazole. One example of a commercially available UV absorber is BLS^{®} 1130 from Mayzo, Inc. of Suwanee, GA. The PVC-based composition may comprise greater than or equal to about 0.1 phr, or optionally about 0.2 phr to less than or equal to about 2 phr, or optionally about 1 phr, of the UV absorber. In aspects, the PVC-based composition may comprise about 0.4 phr of the UV absorber. The UV absorber may constitute, by weight, greater than or equal to about 0.05%, or optionally about 0.1% to less than or equal to about 1%, or optionally about 0.5%, of the PVC-based composition. In an embodiment, the UV absorber may constitute, by weight, about 0.25% of the PVC-based composition.

The HALS may be formulated to help inhibit degradation of the composite part 10, for example, by removing free radicals resulting from photooxidation thereof. The HALS does not absorb visible light or UV radiation. The HALS may comprise a piperidine, an amide, or a combination thereof. In aspects, the HALS may comprise a piperidine. One example of a commercially available HALS is BLS^{®} 292 from Mayzo, Inc. of Suwanee, GA. The PVC-based composition may comprise greater than or equal to about 0.1 phr, or optionally about 0.2 phr to less than or equal to about 2 phr, or optionally about 1 phr, of the HALS. In some configurations, the PVC-based composition may comprise about 0.4 phr of the HALS. The HALS may constitute, by weight, greater than or equal to about 0.05%, or optionally about 0.1% to less than or equal to about 1%, or optionally about 0.5%, of the PVC-based composition. In aspects, the HALS may constitute, by weight, about 0.25% of the PVC-based composition.

The absorbent powder may be formulated to help absorb residual amounts of the plasticizer and/or the stabilizer mixture during processing of the PVC-based composition. In the second PVC-based composition used to manufacture the foam layer 14, the absorbent powder acts as a nucleating agent and assists in the generation of gas bubbles within the foam layer 14. The absorbent powder may comprise particles of a PVC homopolymer. In aspects, the absorbent powder preferably comprises a dispersion grade PVC homopolymer, meaning that the PVC homopolymer is manufacturer via micro-suspension polymerization of vinyl chloride monomer. The dispersion grade PVC homopolymer particles may have a mean particle diameter of greater than or equal to about 1 micrometer to less than or equal to about 50 micrometers. The dispersion grade PVC homopolymer may have an inherent viscosity of greater than or equal to about 0.8 dL/g to less than or equal to about 0.9 dL/g (ASTM D1243-60-A: 0.2% concentration in cyclohexanone at 30°C) and a K-value of greater than or equal to about 63 to less than or equal to about 64. One example of a commercially available absorbent powder is Geon^{®} 124A from Geon Performance Solutions. The PVC-based composition may comprise greater than or equal to about 5 phr to less than or equal to about 15 phr of the absorbent powder. In aspects, the PVC-based composition may comprise about 9 phr of the absorbent powder. The absorbent powder may constitute, by weight, greater than or equal to about 2.5% to less than or equal to about 7.5% of the PVC-based composition. In aspects, the absorbent powder may constitute, by weight, about 4.5% of the PVC-based composition.

The inorganic filler is included in the first PVC-based composition used to form the skin layer 12 and is formulated to help control and/or adjust the rheology and/or viscosity of the first PVC-based composition. The inorganic filler may be included in the first PVC-based composition to help control and/or adjust the density of the skin layer 12. The inorganic filler may comprise calcium carbonate, CaCO₃. The first PVC-based composition may comprise greater than or equal to about 0.5 phr to less than or equal to about 2 phr of the inorganic filler. The inorganic filler may constitute, by weight, greater than or equal to about 0.25% to less than or equal to about 1% of the first PVC-based composition.

The foaming agent is included in the second PVC-based composition used to form the foam layer 14 and is formulated to thermally decompose when heated during the slush molding process to generate fine gas bubbles within the second PVC-based composition, which provide the foam layer 14 with porosity. When heated, the foaming agent may be formulated to thermally decompose and release gases of nitrogen (N₂), carbon monoxide (CO), carbon dioxide (CO₂), or combinations thereof. The foaming agent may comprise an endothermic or an exothermic chemical foaming agent. The foaming agent may comprise an azodicarbonamide. One example of a commercially available endothermic chemical foaming agent is 6836 iD Endo Powder 130 MFC Chemical Foaming Agent (CFA) supplied by iD Additives of LaGrange, IL. One example of a commercially available exothermic chemical foaming agent is 71340 iD MFC Exothermic CFA Powder supplied by iD Additives of LaGrange, IL. The second PVC-based composition may comprise greater than or equal to about 1 phr, or optionally about 5 phr to less than or equal to about 22 phr, or optionally about 10 phr, of the foaming agent. In aspects, the second PVC-based composition may comprise about 6 phr of the foaming agent. The foaming agent may constitute, by weight, greater than or equal to about 0.5%, or optionally about 2.5% to less than or equal to about 12.5%, or optionally about 6%, of the second PVC-based composition. In some configurations, the foaming agent may constitute, by weight, about 3.3% of the second PVC-based composition.

The activator is included in the second PVC-based composition used to form the foam layer 14 and is formulated to help lower the activation energy of the foaming agent so that gas generation can be achieved within the second PVC-based composition at sufficiently low temperatures to avoid overheating and/or charring of the skin layer 12 and/or the foam layer 14. For example, the activator may lower the activation energy of the foaming agent such that the foaming agent thermally decomposes and gas generation occurs within the second PVC-based composition at temperatures greater than or equal to about 150°C, or optionally about 163°C, and less than about 180°C, or optionally less than or equal to about 165°C. Without the activator, thermal decomposition of the foaming agent would generally not occur until the foaming agent is heated to a temperature of greater than or equal to about 180°C, or optionally about 220°C. The activator may comprise a zinc-containing compound. The second PVC-based composition may comprise greater than or equal to about 0.1 phr to less than or equal to about 0.5 phr of the activator. In aspects, the second PVC-based composition may comprise about 0.25 phr of the activator. The activator may constitute, by weight, greater than or equal to about 0.06% to less than or equal to about 0.3% of the second PVC-based composition. In aspects, the activator may constitute, by weight, about 0.14% of the second PVC-based composition.

The optional pigment may be formulated to impart a desired color to the skin layer 12 and/or the foam layer 14. The pigment may comprise carbon black, a metal oxide (e.g., titanium dioxide), or a combination thereof. The PVC-based composition may comprise greater than or equal to about 0.5 phr to less than or equal to about 2 phr of the pigment. In aspects, the PVC-based composition may comprise about 1.2 phr of the pigment. The pigment may constitute, by weight, greater than or equal to about 0.2% to less than or equal to about 1.5% of the PVC-based composition. In aspects, the pigment may constitute, by weight, about 0.67% of the PVC-based composition.

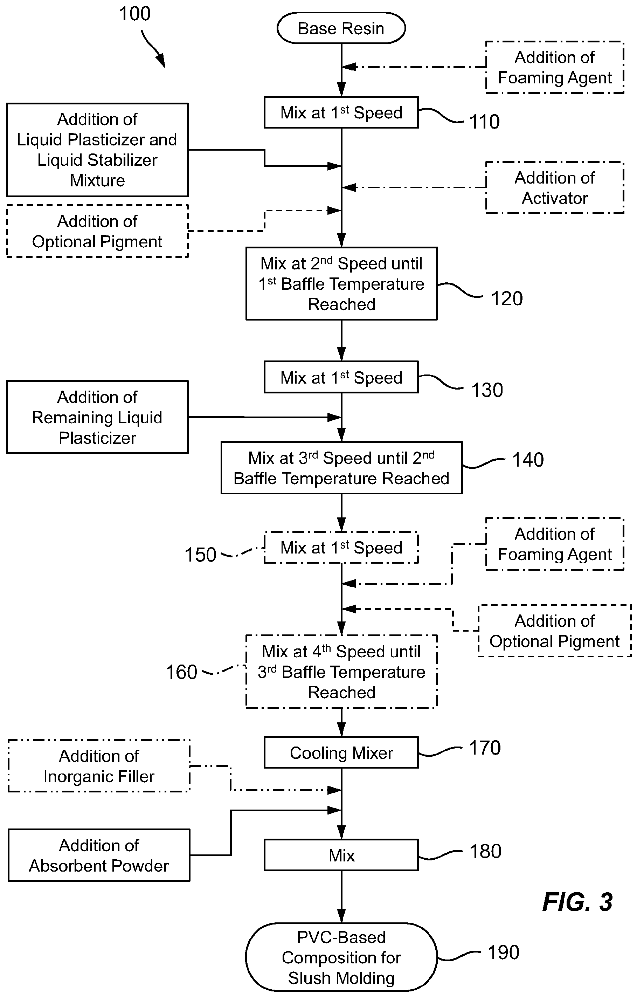

Referring now to Figure 3, the PVC-based composition is manufactured by a method 100 that includes one or more of the following steps. In a first step 110, the base resin is introduced into a mixer, which may be a Henschel-type mixer, and mixed or blended at a 1^{st} speed of greater than or equal to about 350 revolutions per minute (rpm) to less than or equal to about 450 rpm. For example, in one embodiment, the base resin is mixed or blended in the mixer at a 1^{st} speed of about 400 rpm. The base resin is preferably in the form of a powder when introduced into the mixer. When the method 100 is used to manufacture the second PVC-based composition, the foaming agent optionally may be introduced into the mixer along with the base resin in step 110.

In a second step 120, at least a portion of the plasticizer and the stabilizer mixture are introduced into the mixer and mixed at a 2^{nd} speed of greater than or equal to about 500 rpm to less than or equal to about 600 rpm until a 1^{st} baffle temperature of greater than or equal to about 90°C to less than or equal to about 130°C is reached. For example, in one embodiment, the portion of the plasticizer and the stabilizer mixture are introduced into the mixer and mixed at a 2^{nd} speed of about 550 rpm until a 1^{st} baffle temperature of about 110°C is reached. The plasticizer and the stabilizer mixture are preferably in liquid form when introduced into the mixer. The plasticizer and the stabilizer mixture may be uniformly mixed together prior to being introduced into the mixer. In some aspects, in step 120, a portion of the primary plasticizer and all of the secondary plasticizer may be introduced into the mixer. For example, by weight, greater than or equal to about 50% to less than or equal to about 100%, or optionally about 55%, of the primary plasticizer may be introduced into the mixer in step 120. In other aspects, the optional pigment may be introduced into the mixer along with the portion of the plasticizer and the stabilizer mixture in step 120. When the method 100 is used to manufacture the second PVC-based composition, the activator optionally may be introduced into the mixer along with the portion of the plasticizer, the stabilizer mixture, and the optional pigment in step 120.

After the 1^{st} baffle temperature is reached, in step 130, the speed of the mixer may be returned to the 1^{st} speed.

In step 140, the remaining portion of the primary plasticizer may be introduced into the mixer and mixed at a 3^{rd} speed of greater than or equal to about 450 rpm to less than or equal to about 550 rpm until a 2^{nd} baffle temperature of greater than or equal to about 115°C to less than or equal to about 155°C is reached and a bowl temperature of greater than or equal to about 105°C to less than or equal to about 145°C is reached. For example, in one embodiment, the remaining portion of the primary plasticizer is introduced into the mixer and mixed at a 3^{rd} speed of about 500 rpm until a 2^{nd} baffle temperature of about 134°C is reached and a bowl temperature of about 126°C is reached.

When the method 100 is used to manufacture the second PVC-based composition, instead of introducing the foaming agent into the mixer in step 110, the foaming agent alternatively may be introduced into the mixer after step 140. In such case, the method optionally may include additional steps 150 and 160. When the method includes additional steps 150 and 160, prior to step 150, the mixer may be mixed in step 140 at the 3^{rd} speed until the 2^{nd} baffle temperature is reached.

In optional step 150, after the 2^{nd} baffle temperature is reached in step 140, the speed of the mixer may be returned to the 1^{st} speed. Then, in optional step 160, the foaming agent may be introduced into the mixer and mixed at a 4^{th} speed of greater than or equal to about 450 rpm to less than or equal to about 550 rpm until a 3^{rd} baffle temperature of greater than or equal to about 115°C to less than or equal to about 155°C is reached and a bowl temperature of greater than or equal to about 105°C to less than or equal to about 145°C is reached. For example, in optional step 160, the foaming agent may be introduced into the mixer and mixed at a 4^{th} speed of about 500 rpm until a 3^{rd} baffle temperature of about 134°C is reached and a bowl temperature of about 126°C is reached. In aspects where the PVC-based composition comprises greater than about 60 phr of the plasticizer, it may be beneficial to introduce the foaming agent into the mixer in step 160 (instead of step 110) to ensure good absorption of the plasticizer in the pores of the base resin. It may be beneficial, in this situation, to introduce the foaming agent into the mixer in step 160 after a temperature of greater than or equal to about 80°C is reached within the mixer. In some configurations, instead of introducing the optional pigment into the mixer in step 120, the optional pigment may be introduced into the mixer along with the foaming agent in step 160.

After the target baffle temperature and the target bowl temperature are reached in step 140 or step 160, the mixture of the base resin, the plasticizer, the stabilizer mixture, optionally the foaming agent, optionally the activator, and the optional pigment may be discharged to a cooling mixer in step 170.

In step 180, after the mixture has cooled to a temperature of about 50°C, the absorbent powder may be introduced into the cooling mixer and the mixture may be mixed for about 5 minutes to form the PVC-based composition in step 190.

When the method 100 is used to manufacture the first PVC-based composition, in step 180, after the mixture has cooled to a temperature of about 55°C, the inorganic filler may be introduced into the cooling mixer and mixed for about 5 minutes to form the first PVC-based composition in step 190.

In embodiments, a method of manufacturing a polyvinyl chloride (PVC)-based composition for slush molding comprises steps (a) - (g). In step (a), a base resin comprising a PVC homopolymer is introduced into mixer operating at a 1^{st} mixing speed of about 400 rpm. In step (b), liquid additives are introduced into the mixer. The liquid additives comprise a first portion of a primary plasticizer, a secondary plasticizer, and a stabilizer mixture. In step (c), the mixer is operated at a 2^{nd} mixing speed of about 550 rpm until a 1^{st} baffle temperature of about 110°C is reached. In step (d), a remaining portion of the primary plasticizer is introduced into the mixer while the mixer is operating at the 1^{st} Mixing Speed to form a mixture. In step (e), the mixer is operated at a 3^{rd} Mixing Speed of about 500 rpm until a 2^{nd} Baffle Temperature of about 134°C is reached and a Bowl Temperature of about 126°C is reached. In step (f), the mixture is introduced into a cooling mixer. And, in step (g), an absorbent powder is introduced into the cooling mixer to form the PVC-based composition. In some embodiments, the absorbent powder is introduced into the cooling mixer in step (g) at a temperature of about 50°C and mixed in the cooling mixer for about 5 minutes. In some embodiments, the PVC-based composition formed in step (g) may be formulated to produce a foam layer when heated in a mold cavity during a slush molding process. In such case, in step (b), a liquid activator is introduced into the mixer along with the liquid additives. In some aspects, in step (a), a foaming agent is introduced into the mixer along with the base resin. In other aspects, after step (d) and prior to step (e), the mixer is operated at the 3^{rd} Mixing Speed of about 500 rpm until the 1^{st} Baffle Temperature of about 110°C is reached, a foaming agent is introduced into the mixer at the 1^{st} Mixing Speed of about 400 rpm, and then step (e) is performed. In other embodiments, the PVC-based composition formed in step (g) is formulated to produce a skin layer when heated in a mold during a slush molding process. In such case, in some aspects, in step (g), an inorganic filler is introduced the cooling mixer at a temperature of about 55°C and mixing for about 5 minutes to form the PVC-based composition.

When the skin layer 12 and the foam layer 14 are respectively formed from the first PVC-based composition and the second PVC-based composition using a slush molding process, the skin layer 12 and the foam layer 14 may exhibit certain desirable properties. For example, the skin layer 12 may have a hardness of about 69 ±0.5 as measured by ASTM D2240, a tensile strength at maximum load of about 1420 MPa ±26 MPa, as measured by ASTM D412, an elongation at break of about 398% ±16%, as measured by ASTM D412, a tear strength of about 206 kN/m ±11 kN/m, as measured by ASTM D624, and a fog number of about 75 at 95°C and a fog number of about 68 at 110°C, as measured by SAE J1756. When subjected to cold flexibility testing, wherein a 50-millimeter X 150-millimeter sample of the skin layer 12 is bent 180° over a 20-millimeter diameter mandrel at a temperature of about -40°C, the sample of the skin layer 12 does not exhibit cracks. After heat aging, wherein samples of the skin layer 12 are heated at a temperature of about 110°C for about 1000 hours, the tensile strength of the skin layer 12 was only reduced by about 3%, as measured by ASTM D573 and ASTM D412, and the elongation at break of the skin layer 12 was only reduced by about 18%, as measured by ASTM D573 and ASTM D412. When subjected to EMMAQUA exposure testing in New River, Arizona, pigmented samples of the skin layer 12 and the foam layer 14 (black, grey, and beige) had a ΔE of less than 1.

### TPO-Based Composition

In another embodiment, the first and second resin-based compositions each comprise a thermoplastic polyolefin (TPO)-based composition, as defined in claim 1. In such case, the first resin-based composition is referred to as a first TPO-based composition and the second resin-based composition is referred to as a second TPO-based composition. The first and second TPO-based compositions used to respectively form the skin layer 12 and the foam layer 14 each may comprise a base resin, a light stabilizer mixture, and optionally a pigment.

The base resin may comprise an olefin-block copolymer (OBC) and a polypropylene copolymer. The base resin may constitute, by weight, greater than or equal to about 50%, optionally about 55%, or optionally about 60% to less than or equal to about 90%, or optionally about 80%, of the TPO-based composition.

In the first TPO-based composition used to form the skin layer 12, the olefin-block copolymer may constitute, by weight, greater than or equal to about 50% to less than or equal to about 70% of the first TPO-based composition and the polypropylene copolymer may constitute, by weight, greater than or equal to about 10% to less than or equal to about 30% of the first TPO-based composition.

In one aspect, in the second TPO-based composition used to form the foam layer 14, the olefin-block copolymer may constitute, by weight, greater than or equal to about 70% to less than or equal to about 90% of the second TPO-based composition and the polypropylene copolymer may constitute, by weight, greater than or equal to about 5% to less than or equal to about 10% of the second TPO-based composition. In another aspect, in the second TPO-based composition used to form the foam layer 14, the olefin-block copolymer may constitute, by weight, greater than or equal to about 30% to less than or equal to about 50% of the second TPO-based composition and the polypropylene copolymer may constitute, by weight, greater than or equal to about 20% to less than or equal to about 50% of the second TPO-based composition.

In aspects, the olefin-block copolymer of the base resin comprises an ethylene-1-octene copolymer having greater than or equal to about 50 wt.% to less than or equal to about 70 wt.% ethylene based on the total weight of the ethylene-1-octene copolymer. The ethylene-1-octene copolymer has a density of greater than or equal to about 0.887 g/cm³ to less than or equal to about 0.95 g/cm³ and a melt flow rate, as measured according to ASTM D-1238 (at 180 °C and 2.18 kg), of greater than or equal to about 5 g/10 min to less than or equal to about 20 g/10 min.

The polypropylene copolymer of the base resin is highly crystalline with a low impact strength of greater than or equal to about 30 J/m to less than or equal to about 40 J/m, e.g., 35 J/m, and a high melt flow rate, as measured according to ASTM D-1238 (at 230 °C and 2.16 kg), of greater than or equal to about 75 g/10 min to less than or equal to about 125 g/10 min, such as an exemplary melt flow rate of about 100 g/10 min.

The light stabilizer mixture may comprise a sulfur-free stabilizer additive and a hindered amine light stabilizer (HALS). The sulfur-free stabilizer additive may be included in the TPO-based composition to inhibit blooming, reduce volatile organic compound (VOC) emissions, and to improve the thermal stability of the composite part 10. Nonlimiting examples of the sulfur-free stabilizer additives include ,2,6,6-tetramethylpiperidin-4-yl-hexadecanoate, 2,2,6,6-tetramethylpiperidin-4-yl-octadecanoate, and combinations thereof. The sulfur-free stabilizer additive may constitute, by weight, greater than or equal to about 0.1% to less than or equal to about 0.8% of the TPO-based composition. The HALS included in the TPO-based composition may comprise substantially the same materials as described above with respect to the HALS included in the PVC-based composition and may be included in the TPO-based composition for substantially the same reasons. For example, the HALS may comprise a piperidine, an amide, or a combination thereof. In aspects, the HALS may comprise a piperidine. The HALS may constitute, by weight, greater than or equal to about 2% to less than or equal to about 6% of the TPO-based composition.

In addition to the base resin, the light stabilizer mixture, and the optional pigment, the first TPO-based composition used to form the skin layer 12 may comprise an adhesion promoter, a scuff and mar resistance additive, and an inorganic filler.

The adhesion promoter, which may also be referred to as a compatibilizer, may be formulated to help form cohesive bonds within the skin layer 12. The adhesion in the first TPO-based composition used to form the skin layer 12 may constitute, by weight, greater than or equal to about 1% to less than or equal to about 10% of the first TPO-based composition. The adhesion promoter may comprise a maleic-anhydride grafted olefin-block copolymer. The maleic-anhydride grafted olefin-block copolymer of the adhesion promoter may be the same type of olefin-block copolymer as in the base polymer. For example, in the base resin, the olefin-block copolymer may comprise an ethylene-1-octene copolymer and the adhesion promoter may comprise maleic anhydride-grafted ethylene-1-octene copolymer. In some aspects, the adhesion promoter comprises the maleic anhydride-grafted ethylene-1-octene copolymer at a concentration of greater than or equal to about 95 wt.% to less than or equal to about 98 wt. %, maleic anhydride at a concentration of greater than or equal to about 1 wt. % to less than or equal to about 3 wt. %, and N-ethylethylenediamine at a concentration of greater than or equal to about 1 wt.% to less than or equal to about 2 wt.%, wherein the wt.% is based on the total weight of the adhesion promoter.

The scuff and mar resistance additive may be formulated to improve the ability of the first TPO-based composition to resist scuffing, marring, and scratching. Scuff and mar resistance additives include amides, lubricants (including silicon oils), organic-modified siloxanes, thermoplastic elastomers, and grafted polymers, as non-limiting examples. In one configuration, the scuff and mar resistance additive is an alloy of a lubricant and a thermoplastic elastomer. An exemplary and non-limiting scuff and mar resistance additive is NOF^{®}-ALLOY KA832 scratch improver from NOF Corporation. The scuff and mar resistance additive may constitute, by weight, greater than or equal to about 3% to less than or equal to about 7% of the first TPO-based composition.

The inorganic filler included in first TPO-based composition used to form the skin layer 12 may be formulated to control and/or adjust the density of the skin layer 12 and may comprise talc, hydrous magnesium silicate, or a combination thereof. The inorganic filler may constitute, by weight, greater than or equal to about 3% to less than or equal to about 10% of the first TPO-based composition. In aspects, the inorganic filler increases, and thus improves, the bulk density of the first TPO-based composition. In certain aspects, the bulk density of the first TPO-based composition is greater than or equal to about 18 lb/ft³ to less than or equal to about 21 lb/ft³.

In addition to the base resin, the light stabilizer mixture, and the optional pigment, the second TPO-based composition used to form the foam layer 14 may comprise a heat stabilizer, a foaming agent, and an activator.

The heat stabilizer included in the second TPO-based composition used to form the foam layer 14 may comprise one or more of the same materials as descried above with respect to the heat stabilizer included in the PVC-based composition and may be included in the TPO-based composition for substantially the same reasons. The heat stabilizer may constitute, by weight, greater than or equal to about 1% to less than or equal to about 3% of the second TPO-based composition.

The foaming agent included in the second TPO-based composition used to form the foam layer 14 may comprise one or more of the same materials as descried above with respect to the foaming agent included in the PVC-based composition and may be included in the TPO-based composition for substantially the same reasons. The foaming agent may constitute, by weight, greater than or equal to about 0.25% to less than or equal to about 5% of the second TPO-based composition.

The activator included in the second TPO-based composition used to form the foam layer 14 may comprise one or more of the same materials as descried above with respect to the activator included in the PVC-based composition and may be included in the TPO-based composition for substantially the same reasons. The activator may constitute, by weight, greater than or equal to about 0.05% to less than or equal to about 0.5% of the second TPO-based composition.

The optional pigment may comprise one or more of the same materials as descried above with respect to the pigment optionally included in the PVC-based composition and may be included in the TPO-based composition in substantially the same amounts.

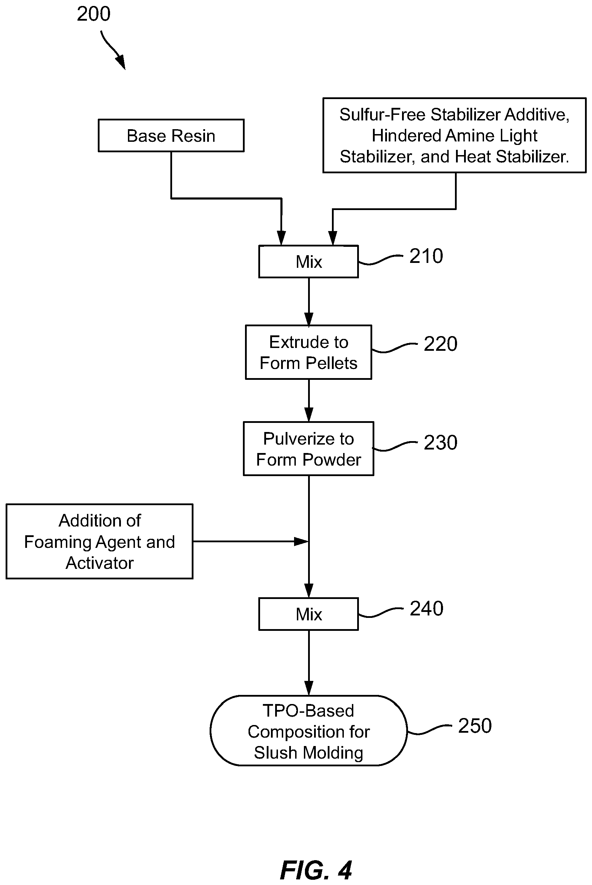

Referring now to Figure 4, the TPO-based composition is manufactured by a method 200 that includes one or more of the following steps. In a first step 210, the base resin, the sulfur-free stabilizer additive, the HALS, and the heat stabilizer are mixed together to form a mixture. In step 220, the mixture is extruded to form pellets. In step 230, the pellets are ground or pulverized to form a powder. The pellets may be ground or pulverized, for example, under water. In step 240, the powder is mixed with the foaming agent and the activator to uniformly distribute the foaming agent and the activator throughout the powder and form the TPO-based composition in step 250.

In embodiments, a method of manufacturing a TPO-based composition for slush molding comprises steps (a) - (e). In step (a), a base resin, a sulfur-free stabilizer additive, a hindered amine light stabilizer (HALS), and a heat stabilizer are mixed to form a mixture. In step (b), the mixture is extruded to form pellets. In step (c),the pellets are ground or pulverized to form a powder. In step (d), a foaming agent and an activator are introduced into the powder. In step (e), the powder, the foaming agent, and the activator are mixed together to uniformly distribute the foaming agent and the activator throughout the powder and form the TPO-based composition.

The broad teachings of the disclosure can be implemented in a variety of forms, as defined by the appended claims.

The terminology used herein is for the purpose of describing example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, elements, compositions, steps, integers, operations, and/or components, but do not preclude the presence or addition of one or more other features, integers, steps, operations, elements, components, and/or groups thereof. Although the open-ended terms "comprises," "comprising," "including," and "having," are to be understood as non-restrictive terms used to describe and claim various embodiments set forth herein, in certain aspects, the terms may alternatively be understood to instead be a more limiting and restrictive term, such as "consisting of" or "consisting essentially of." Thus, for any given embodiment reciting compositions, materials, components, elements, ingredients, features, integers, operations, and/or process steps, the present disclosure also specifically includes embodiments consisting of, or consisting essentially of, such recited compositions, materials, components, elements, ingredients, features, integers, operations, and/or process steps. In the case of "consisting of," the alternative embodiment excludes any additional compositions, materials, components, elements, ingredients, features, integers, operations, and/or process steps, while in the case of "consisting essentially of," any additional compositions, materials, components, elements, ingredients, features, integers, operations, and/or process steps that materially affect the basic and novel characteristics are excluded from such an embodiment, but any compositions, materials, components, elements, ingredients, features, integers, operations, and/or process steps that do not materially affect the basic and novel characteristics can be included in the embodiment.

Any method steps, processes, and operations described herein are not to be construed as necessarily requiring their performance in the order discussed or illustrated, unless specifically identified as an order of performance. It is also to be understood that additional steps may be employed, unless otherwise indicated.

Throughout this disclosure, the numerical values represent approximate measures or limits to ranges and encompass minor deviations from the given values and embodiments, having about the value mentioned as well as those having exactly the value mentioned. Other than the working examples provided at the end of the detailed description, all numerical values of parameters (e.g., of quantities or conditions) in this specification are to be understood as being modified in all instances by the term "about" whether or not "about" actually appears before the numerical value. Numerical values of parameters in the appended claims are to be understood as being modified by the term "about" only when such term appears before the numerical value. "About" indicates that the stated numerical value allows some slight imprecision (with some approach to exactness in the value; approximately or reasonably close to the value; nearly). If the imprecision provided by "about" is not otherwise understood in the art with this ordinary meaning, then "about" as used herein indicates at least variations that may arise from ordinary methods of measuring and using such parameters. For example, "about" may comprise a variation of less than or equal to 5%, optionally less than or equal to 4%, optionally less than or equal to 3%, optionally less than or equal to 2%, optionally less than or equal to 1%, optionally less than or equal to 0.5%, and in certain aspects, optionally less than or equal to 0.1%. In addition, disclosure of ranges includes disclosure of all values and further divided ranges within the entire range, including endpoints and sub-ranges given for the ranges.

As used herein, the terms "composition" and "material" are used interchangeably to refer broadly to a substance containing at least the preferred chemical constituents, elements, or compounds, but which may also comprise additional elements, compounds, or substances, including trace amounts of impurities, unless otherwise indicated. An "X-based" composition or material broadly refers to compositions or materials in which "X" is the single largest constituent of the composition or material on a weight percentage (%) basis. This may include compositions or materials having, by weight, greater than 50% X, as well as those having, by weight, less than 50% X, so long as X is the single largest constituent of the composition or material based upon its overall weight. When a composition or material is referred to as being "substantially free" of a substance, the composition or material may comprise, by weight, less than 5%, optionally less than 3%, optionally less than 1%, or optionally less than 0.1% of the substance.

## Claims

1. A method of manufacturing a composite part, the method comprising:
(a) introducing a first resin-based composition into a mold cavity using a slush molding technique, the mold cavity being defined by a mold surface;
(b) heating the mold cavity to melt the first resin-based composition and form a skin layer on the mold surface;
(c) introducing a second resin-based composition into the mold cavity using a slush molding technique;
(d) heating the mold cavity to melt the second resin-based composition and form a foam layer on the mold surface over the skin layer; and during the formation of the foam layer, chemical bonds form between the skin layer and the foam layer that join the skin layer and the foam layer together, and
(e) removing the composite part from the mold cavity,
**characterized in that** the first resin-based composition and the second resin-based composition are of the same type and comprise at least one polymer of the same type or at least one polymer having a monomer unit of the same type, and each comprise:
(1) a polyvinyl chloride (PVC)-based composition comprising:
100 parts per hundred resin of one or more PVC homopolymers;
30 parts per hundred resin to 90 parts per hundred resin of a primary plasticizer comprising an adipate, phthalate, trimellitate, or a combination thereof;
1 part per hundred resin to 20 parts per hundred resin of a secondary plasticizer comprising an oil-based material;
1 parts per hundred resin to 10 parts per hundred resin of a heat stabilizer;
0.1 parts per hundred resin to 2 parts per hundred resin of a UV absorber;
0.1 parts per hundred resin to 2 parts per hundred resin of a hindered amine light stabilizer (HALS); and
5 parts per hundred resin to 15 parts per hundred resin of an absorbent powder, or
(2) a thermoplastic polyolefin (TPO)-based composition comprising, by weight:
50% to 90% of a base resin comprising an olefin-block copolymer and a polypropylene copolymer,
0.1% to 0.8% of a sulfur-free stabilizer additive; and
2% to 6% of a hindered amine light stabilizer (HALS).

2. The method of claim 1, wherein the first resin-based composition and the second resin-based composition each comprise the polyvinyl chloride (PVC)-based composition, and wherein the heat stabilizer comprises a zinc-containing compound and a barium-containing compound, the UV absorber comprises a benzotriazole, a benzophenone, benzoate, or a combination thereof, the HALS comprises a piperidine compound, and the absorbent powder comprises porous particles of a PVC homopolymer.

3. The method of claim 1 or 2, wherein the PVC-based composition of the first resin-based composition comprises 60 parts per hundred resin to 90 parts per hundred resin of the primary plasticizer and 5 parts per hundred resin to 15 parts per hundred resin of the secondary plasticizer, and wherein the PVC-based composition of the first resin-based composition further comprises:
0.5 parts per hundred resin to 2 parts per hundred resin of an inorganic filler.

4. The method of any one of claims 1 to 3, wherein the PVC-based composition of the second resin-based composition comprises 50 parts per hundred resin to 70 parts per hundred resin of the primary plasticizer and 1 part per hundred resin to 10 parts per hundred resin of the secondary plasticizer, and wherein the PVC-based composition of the second resin-based composition further comprises:
1 part per hundred resin to 22 parts per hundred resin of a foaming agent; and
0.1 parts per hundred resin to 0.5 parts per hundred resin of an activator.

5. The method of claim 4, wherein the foaming agent comprises an endothermic chemical foaming agent or an exothermic chemical foaming agent, the activator comprises a zinc-containing compound, and wherein, when the foaming agent is combined with the activator, the foaming agent is configured to decompose at temperatures greater than or equal to 150 degrees Celsius to less than 180 degrees Celsius to release gases of nitrogen, carbon monoxide, carbon dioxide, or combinations thereof.

6. The method of claim 1, wherein the TPO-based composition of the second resin-based composition further comprises, by weight:
1% to 3% of a heat stabilizer;
0.25% to 5% of a foaming agent; and
0.05% to 0.5% of an activator.

7. The method of claim 6, wherein the heat stabilizer comprises a zinc-containing compound and a barium-containing compound, the foaming agent comprises an endothermic chemical foaming agent or an exothermic chemical foaming agent, the activator comprises a zinc-containing compound, and wherein, when the foaming agent is combined with the activator, the foaming agent is configured to decompose at temperatures greater than or equal to 150 degrees Celsius to less than 180 degrees Celsius to release gases of nitrogen, carbon monoxide, carbon dioxide, or combinations thereof.

8. The method of claim 6 or 7, wherein the TPO-based composition of the second resin-based composition comprises, by weight:
70% to 90% of the olefin-block copolymer and 5% to 10% of the polypropylene copolymer, or
30% to 50% of the olefin-block copolymer and 20% to 50% of the polypropylene copolymer.

9. The method of any one of claims 1 to 8, wherein the mold cavity is heated in step (b) to a temperature of greater than or equal to 235 degrees Celsius to less than or equal to 240 degrees Celsius, and wherein the mold cavity is heated in step (d) to a temperature of greater than or equal to 185 degrees Celsius to less than or equal to 210 degrees Celsius.

10. A composite part comprising:
a skin layer having a first side and an opposite second side, wherein the first side of the skin layer defines a Class A surface; and
a foam layer formed in situ on the second side of the skin layer, and the skin layer and the foam layer are chemically bonded to each other along an interface therebetween without use of an adhesive,
**characterized in that** the skin layer and the foam layer each comprise at least one polymer of the same type or at least one polymer having a monomer unit of the same type, and each comprise:
(1) a polyvinyl chloride (PVC)-based composition comprising:
100 parts per hundred resin of one or more PVC homopolymers;
30 parts per hundred resin to 90 parts per hundred resin of a primary plasticizer comprising an adipate, phthalate, trimellitate, or a combination thereof;
1 part per hundred resin to 20 parts per hundred resin of a secondary plasticizer comprising an oil-based material;
1 parts per hundred resin to 10 parts per hundred resin of a heat stabilizer;
0.1 parts per hundred resin to 2 parts per hundred resin of a UV absorber;
0.1 parts per hundred resin to 2 parts per hundred resin of a hindered amine light stabilizer (HALS); and
5 parts per hundred resin to 15 parts per hundred resin of an absorbent powder, or
(2) a thermoplastic polyolefin (TPO)-based composition comprising, by weight:
50% to 90% of a base resin comprising an olefin-block copolymer and a polypropylene copolymer,
0.1% to 0.8% of a sulfur-free stabilizer additive; and
2% to 6% of a hindered amine light stabilizer (HALS).

11. The composite part of claim 10, wherein the foam layer is porous with a density of greater than or equal to 0.17 grams per cubic centimeter and less than or equal to 0.5 grams per cubic centimeter, and wherein the density of the foam layer is less than that of the skin layer.

12. The composite part of claim 10 or 11, wherein:
(1) the skin layer and the foam layer each comprise the PVC-based composition and the skin layer has a density of greater than or equal to 1.15 grams per cubic centimeter to less than or equal to 1.2 grams per cubic centimeter; or
(2) the skin layer and the foam layer each comprise the TPO-based composition and the skin layer has a density of greater than or equal to 0.89 grams per cubic centimeter to less than or equal to 0.92 grams per cubic centimeter.

13. The composite part according to any one of claims 10 to 12 wherein the bonding strength between the skin layer and the foam layer is greater than 40 Newtons per centimeter as measured by 90° peel testing on a tensile compression testing machine.

## Patentansprüche

1. Verfahren zum Herstellen eines Verbundteils, das Verfahren umfassend:
(a) Einbringen einer ersten harzbasierten Zusammensetzung in einen Formhohlraum unter Verwendung einer Slush-Molding-Technik, wobei der Formhohlraum durch eine Formoberfläche definiert ist;
(b) Erhitzen des Formhohlraums zum Schmelzen der ersten harzbasierten Zusammensetzung und zum Bilden einer Hautschicht auf der Formoberfläche;
(c) Einbringen einer zweiten harzbasierten Zusammensetzung in den Formhohlraum unter Verwendung einer Slush-Molding-Technik;
(d) Erhitzen des Formhohlraums zum Schmelzen der zweiten harzbasierten Zusammensetzung und zum Bilden einer Schaumschicht auf der Formoberfläche über der Hautschicht; und während der Bildung der Schaumschicht werden chemische Bindungen zwischen der Hautschicht und der Schaumschicht gebildet, die die Hautschicht und die Schaumschicht miteinander verbinden, und
(e) Entnehmen des Verbundteils aus dem Formhohlraum,
**dadurch gekennzeichnet, dass** die erste harzbasierte Zusammensetzung und die zweite harzbasierte Zusammensetzung vom gleichen Typ sind und mindestens ein Polymer des gleichen Typs oder mindestens ein Polymer mit einer Monomereinheit des gleichen Typs umfassen und jeweils Folgendes umfassen:
(1) eine auf Polyvinylchlorid (PVC) basierende Zusammensetzung, umfassend:
100 Teile pro 100 Teile Harz eines oder mehrerer PVC-Homopolymere;
30 Teile pro 100 Teile Harz bis 90 Teile pro 100 Teile Harz eines primären Weichmachers, umfassend ein Adipat, Phthalat, Trimellitat oder eine Kombination davon;
1 Teil pro 100 Teile Harz bis 20 Teile pro 100 Teile Harz eines sekundären Weichmachers, umfassend ein ölbasiertes Material;
1 Teil pro 100 Teile Harz bis 10 Teile pro 100 Teile Harz eines Hitzestabilisators;
0,1 Teile pro 100 Teile Harz bis 2 Teile pro 100 Teile Harz eines UV-Absorbers;
0,1 Teile pro 100 Teile Harz bis 2 Teile pro 100 Teile Harz eines sterisch gehinderten Amin-Lichtstabilisators (HALS); und
5 Teile pro 100 Teile Harz bis 15 Teile pro 100 Teile Harz eines absorbierenden Pulvers, oder
(2) eine auf thermoplastischem Polyolefin (TPO) basierende Zusammensetzung, umfassend, bezogen auf das Gewicht:
50 % bis 90 % eines Basisharzes, umfassend ein Olefin-Blockcopolymer und ein Polypropylen-Copolymer,
0,1 % bis 0,8 % eines schwefelfreien Stabilisatoradditivs; und
2 % bis 6 % eines sterisch gehinderten Amin-Lichtstabilisators (HALS).

2. Verfahren nach Anspruch 1, wobei die erste harzbasierte Zusammensetzung und die zweite harzbasierte Zusammensetzung jeweils die auf Polyvinylchlorid (PVC) basierende Zusammensetzung umfassen und wobei der Hitzestabilisator eine zinkhaltige Verbindung und eine bariumhaltige Verbindung umfasst, der UV-Absorber ein Benzotriazol, ein Benzophenon, Benzoat oder eine Kombination davon umfasst, der HALS eine Piperidinverbindung umfasst und das absorbierende Pulver poröse Partikel eines PVC-Homopolymers umfasst.

3. Verfahren nach Anspruch 1 oder 2, wobei die PVC-basierte Zusammensetzung der ersten harzbasierten Zusammensetzung 60 Teile pro 100 Teile Harz bis 90 Teile pro 100 Teile Harz des primären Weichmachers und 5 Teile pro 100 Teile Harz bis 15 Teile pro 100 Teile Harz des sekundären Weichmachers umfasst und wobei die PVC-basierte Zusammensetzung der ersten harzbasierten Zusammensetzung ferner Folgendes umfasst:
0,5 Teile pro 100 Teile Harz bis 2 Teile pro 100 Teile Harz eines anorganischen Füllstoffs.

4. Verfahren nach einem der Ansprüche 1 bis 3, wobei die PVC-basierte Zusammensetzung der zweiten harzbasierten Zusammensetzung 50 Teile pro 100 Teile Harz bis 70 Teile pro 100 Teile Harz des primären Weichmachers und 1 Teil pro 100 Teile Harz bis 10 Teile pro 100 Teile Harz des sekundären Weichmachers umfasst und wobei die PVC-basierte Zusammensetzung der zweiten harzbasierten Zusammensetzung ferner Folgendes umfasst:
1 Teil pro 100 Teile Harz bis 22 Teile pro 100 Teile Harz eines Schaummittels; und
0,1 Teile pro 100 Teile Harz bis 0,5 Teile pro 100 Teile Harz eines Aktivators.

5. Verfahren nach Anspruch 4, wobei das Schaummittel ein endothermes chemisches Schaummittel oder ein exothermes chemisches Schaummittel umfasst, der Aktivator eine zinkhaltige Verbindung umfasst und wobei, wenn das Schaummittel mit dem Aktivator kombiniert wird, das Schaummittel konfiguriert ist, um sich bei Temperaturen größer als oder gleich wie 150 Grad Celsius bis kleiner als 180 Grad Celsius zu zersetzen, um Stickstoff, Kohlenmonoxid, Kohlendioxid oder Kombinationen davon freizusetzen.

6. Verfahren nach Anspruch 1, wobei die TPO-basierte Zusammensetzung der zweiten harzbasierten Zusammensetzung ferner Folgendes umfasst, bezogen auf das Gewicht:
1 % bis 3 % eines Hitzestabilisators;
0,25 % bis 5 % eines Schaummittels; und
0,05 % bis 0,5 % eines Aktivators.

7. Verfahren nach Anspruch 6, wobei der Hitzestabilisator eine zinkhaltige Verbindung und eine bariumhaltige Verbindung umfasst, das Schaummittel ein endothermes chemisches Schaummittel oder ein exothermes chemisches Schaummittel umfasst, der Aktivator eine zinkhaltige Verbindung umfasst und wobei, wenn das Schaummittel mit dem Aktivator kombiniert wird, das Schaummittel konfiguriert ist, um sich bei Temperaturen größer als oder gleich wie 150 Grad Celsius bis kleiner als 180 Grad Celsius zu zersetzen, um Stickstoff, Kohlenmonoxid, Kohlendioxid oder Kombinationen davon freizusetzen.

8. Verfahren nach Anspruch 6 oder 7, wobei die TPO-basierte Zusammensetzung der zweiten harzbasierten Zusammensetzung Folgendes umfasst, bezogen auf das Gewicht:
70 % bis 90 % des Olefin-Blockcopolymers und 5 % bis 10 % des Polypropylen-Copolymers, oder
30 % bis 50 % des Olefin-Blockcopolymers und 20 % bis 50 % des Polypropylen-Copolymers.

9. Verfahren nach einem der Ansprüche 1 bis 8, wobei der Formhohlraum in Schritt (b) auf eine Temperatur von größer als oder gleich wie 235 Grad Celsius bis kleiner als oder gleich wie 240 Grad Celsius erhitzt wird und wobei der Formhohlraum in Schritt (d) auf eine Temperatur von größer als oder gleich wie 185 Grad Celsius bis kleiner als oder gleich wie 210 Grad Celsius erhitzt wird.

10. Verbundteil, umfassend:
eine Hautschicht, die einer erste Seite und eine gegenüberliegende zweite Seite aufweist, wobei die erste Seite der Hautschicht eine Oberfläche der Klasse A definiert; und
eine Schaumschicht, die *in situ* auf der zweiten Seite der Hautschicht gebildet ist, und wobei die Hautschicht und die Schaumschicht entlang einer Grenzfläche dazwischen chemisch miteinander verbunden sind, ohne Verwendung eines Klebstoffs,
**dadurch gekennzeichnet, dass** die Hautschicht und die Schaumschicht jeweils mindestens ein Polymer des gleichen Typs oder mindestens ein Polymer mit einer Monomereinheit des gleichen Typs umfassen und jeweils Folgendes umfassen:
(1) eine auf Polyvinylchlorid (PVC) basierende Zusammensetzung, umfassend:
100 Teile pro 100 Teile Harz eines oder mehrerer PVC-Homopolymere;
30 Teile pro 100 Teile Harz bis 90 Teile pro 100 Teile Harz eines primären Weichmachers, umfassend ein Adipat, Phthalat, Trimellitat oder eine Kombination davon;
1 Teil pro 100 Teile Harz bis 20 Teile pro 100 Teile Harz eines sekundären Weichmachers, umfassend ein ölbasiertes Material;
1 Teil pro 100 Teile Harz bis 10 Teile pro 100 Teile Harz eines Hitzestabilisators;
0,1 Teile pro 100 Teile Harz bis 2 Teile pro 100 Teile Harz eines UV-Absorbers;
0,1 Teile pro 100 Teile Harz bis 2 Teile pro 100 Teile Harz eines sterisch gehinderten Amin-Lichtstabilisators (HALS); und
5 Teile pro 100 Teile Harz bis 15 Teile pro 100 Teile Harz eines absorbierenden Pulvers, oder
(2) eine auf thermoplastischem Polyolefin (TPO) basierende Zusammensetzung, umfassend, bezogen auf das Gewicht:
50 % bis 90 % eines Basisharzes, umfassend ein Olefin-Blockcopolymer und ein Polypropylen-Copolymer,
0,1 % bis 0,8 % eines schwefelfreien Stabilisatoradditivs; und
2 % bis 6 % eines sterisch gehinderten Amin-Lichtstabilisators (HALS).

11. Verbundteil nach Anspruch 10, wobei die Schaumschicht porös ist mit einer Dichte von größer als oder gleich wie 0,17 Gramm pro Kubikzentimeter und kleiner als oder gleich wie 0,5 Gramm pro Kubikzentimeter, und wobei die Dichte der Schaumschicht geringer ist als die der Hautschicht.

12. Verbundteil nach Anspruch 10 oder 11, wobei:
(1) die Hautschicht und die Schaumschicht jeweils die PVC-basierte Zusammensetzung umfassen und die Hautschicht eine Dichte von größer als oder gleich wie 1,15 Gramm pro Kubikzentimeter bis kleiner als oder gleich wie 1,2 Gramm pro Kubikzentimeter aufweist; oder
(2) die Hautschicht und die Schaumschicht jeweils die TPO-basierte Zusammensetzung umfassen und die Hautschicht eine Dichte von größer als oder gleich wie 0,89 Gramm pro Kubikzentimeter bis kleiner als oder gleich wie 0,92 Gramm pro Kubikzentimeter aufweist.

13. Verbundteil nach einem der Ansprüche 10 bis 12, wobei die Haftfestigkeit zwischen der Hautschicht und der Schaumschicht gemessen durch 90°-Abschälprüfung an einer Zug-Druck-Prüfmaschine größer als 40 Newton pro Zentimeter ist.

## Revendications

1. Procédé de fabrication d'une pièce composite, le procédé comprenant :
(a) l'introduction d'une première composition à base de résine dans une cavité de moule à l'aide d'une technique de moulage par embouage, la cavité de moule étant définie par une surface de moule ;
(b) le chauffage de la cavité de moule afin de faire fondre la première composition à base de résine et de former une couche de revêtement sur la surface de moule ;
(c) l'introduction d'une deuxième composition à base de résine dans la cavité de moule à l'aide d'une technique de moulage par embouage ;
(d) le chauffage de la cavité de moule afin de faire fondre la deuxième composition à base de résine et de former une couche de mousse sur la surface de moule par-dessus la couche de revêtement ; et, pendant la formation de la couche de mousse, des liaisons chimiques se forment entre la couche de revêtement et la couche de mousse et joignent la couche de revêtement et la couche de mousse ensemble, et
(e) le retrait de la pièce composite de la cavité de moule,
**caractérisé en ce que** la première composition à base de résine et la deuxième composition à base de résine sont du même type et comprennent au moins un polymère du même type ou au moins un polymère ayant une unité monomère du même type, et comprennent chacune :
(1) une composition à base de polychlorure de vinyle (PVC) comprenant :
100 parties pour cent de résine d'un ou plusieurs homopolymères de PVC ;
30 parties pour cent de résine à 90 parties pour cent de résine d'un plastifiant principal comprenant un adipate, un phtalate, un trimellitate ou une combinaison de ceux-ci ;
1 partie pour cent de résine à 20 parties pour cent de résine d'un plastifiant secondaire comprenant une matière à base d'huile ;
1 partie pour cent de résine à 10 parties pour cent de résine d'un stabilisant thermique ;
0,1 partie pour cent de résine à 2 parties pour cent de résine d'un absorbeur d'ultraviolets ;
0,1 partie pour cent de résine à 2 parties pour cent de résine d'un stabilisant à la lumière à amines encombrées (HALS) ; et
5 parties pour cent de résine à 15 parties pour cent de résine d'une poudre absorbante, ou
(2) une composition à base de polyoléfine thermoplastique (TPO) comprenant, en poids :
50 % à 90 % d'une résine de base comprenant un copolymère à blocs d'oléfine et un copolymère de polypropylène,
0,1 % à 0,8 % d'un additif stabilisant sans soufre ; et
2 % à 6 % d'un stabilisant à la lumière à amines encombrées (HALS).

2. Procédé selon la revendication 1, dans lequel la première composition à base de résine et la deuxième composition à base de résine comprennent chacune la composition à base de polychlorure de vinyle (PVC), et dans lequel le stabilisant thermique comprend un composé contenant du zinc et un composé contenant du baryum, l'absorbeur d'ultraviolets comprend un benzotriazole, une benzophénone, du benzoate ou une combinaison de ceux-ci, le HALS comprend un composé de pipéridine, et la poudre absorbante comprend des particules poreuses d'un homopolymère de PVC.

3. Procédé selon la revendication 1 ou 2, dans lequel la composition à base de PVC de la première composition à base de résine comprend 60 parties pour cent de résine à 90 parties pour cent de résine du plastifiant principal et 5 parties pour cent de résine à 15 parties pour cent de résine du plastifiant secondaire, et dans lequel la composition à base de PVC de la première composition à base de résine comprend en outre :
0,5 partie pour cent de résine à 2 parties pour cent de résine d'une charge inorganique.

4. Procédé selon l'une quelconque des revendications 1 à 3, dans lequel la composition à base de PVC de la deuxième composition à base de résine comprend 50 parties pour cent de résine à 70 parties pour cent de résine du plastifiant principal et 1 partie pour cent de résine à 10 parties pour cent de résine du plastifiant secondaire, et dans lequel la composition à base de PVC de la deuxième composition à base de résine comprend en outre :
1 partie pour cent de résine à 22 parties pour cent de résine d'un agent moussant ; et
0,1 partie pour cent de résine à 0,5 partie pour cent de résine d'un activateur.

5. Procédé selon la revendication 4, dans lequel l'agent moussant comprend un agent moussant chimique endothermique ou un agent moussant chimique exothermique, l'activateur comprend un composé contenant du zinc, et dans lequel, lorsque l'agent moussant est combiné avec l'activateur, l'agent moussant est configuré pour se décomposer à des températures supérieures ou égales à 150 degrés Celsius à inférieures à 180 degrés Celsius afin de libérer des gaz d'azote, de monoxyde de carbone, de dioxyde de carbone, ou des combinaisons de ceux-ci.

6. Procédé selon la revendication 1, dans lequel la composition à base de TPO de la deuxième composition à base de résine comprend en outre, en poids :
1 % à 3 % d'un stabilisant thermique ;
0,25 % à 5 % d'un agent moussant ; et
0,05 % à 0,5 % d'un activateur.

7. Procédé selon la revendication 6, dans lequel le stabilisant thermique comprend un composé contenant du zinc et un composé contenant du baryum, l'agent moussant comprend un agent moussant chimique endothermique ou un agent moussant chimique exothermique, l'activateur comprend un composé contenant du zinc, et dans lequel, lorsque l'agent moussant est combiné avec l'activateur, l'agent moussant est configuré pour se décomposer à des températures supérieures ou égales à 150 degrés Celsius à inférieures à 180 degrés Celsius afin de libérer des gaz d'azote, de monoxyde de carbone, de dioxyde de carbone, ou des combinaisons de ceux-ci.

8. Procédé selon la revendication 6 ou 7, dans lequel la composition à base de TPO de la deuxième composition à base de résine comprend, en poids :
70 % à 90 % du copolymère à blocs d'oléfine et 5 % à 10 % du copolymère de polypropylène, ou
30 % à 50 % du copolymère à blocs d'oléfine et 20 % à 50 % du copolymère de polypropylène.

9. Procédé selon l'une quelconque des revendications 1 à 8, dans lequel la cavité de moule est chauffée à l'étape (b) à une température supérieure ou égale à 235 degrés Celsius à inférieure ou égale à 240 degrés Celsius, et dans lequel la cavité de moule est chauffée à l'étape (d) à une température supérieure ou égale à 185 degrés Celsius à inférieure ou égale à 210 degrés Celsius.

10. Pièce composite comprenant :
une couche de revêtement ayant un premier côté et un deuxième côté opposé, dans laquelle le premier côté de la couche de revêtement définit une surface de classe A ; et
une couche de mousse formée in situ sur le deuxième côté de la couche de revêtement, et la couche de revêtement et la couche de mousse sont liées chimiquement l'une à l'autre le long d'une interface entre elles sans utiliser d'adhésif,
**caractérisée en ce que** la couche de revêtement et la couche de mousse comprennent chacune au moins un polymère du même type ou au moins un polymère ayant une unité monomère du même type, et comprennent chacune :
(1) une composition à base de polychlorure de vinyle (PVC) comprenant :
100 parties pour cent de résine d'un ou plusieurs homopolymères de PVC ;
30 parties pour cent de résine à 90 parties pour cent de résine d'un plastifiant principal comprenant un adipate, un phtalate, un trimellitate, ou une combinaison de ceux-ci ;
1 partie pour cent de résine à 20 parties pour cent de résine d'un plastifiant secondaire comprenant une matière à base d'huile ;
1 partie pour cent de résine à 10 parties pour cent de résine d'un stabilisant thermique ;
0,1 partie pour cent de résine à 2 parties pour cent de résine d'un absorbeur d'ultraviolets ;
0,1 partie pour cent de résine à 2 parties pour cent de résine d'un stabilisant à la lumière à amines encombrées (HALS) ; et
5 parties pour cent de résine à 15 parties pour cent de résine d'une poudre absorbante, ou
(2) une composition à base de polyoléfine thermoplastique (TPO) comprenant, en poids :
50 % à 90 % d'une résine de base comprenant un copolymère à blocs d'oléfine et un copolymère de polypropylène,
0,1 % à 0,8 % d'un additif stabilisant sans soufre ; et
2 % à 6 % d'un stabilisant à la lumière à amines encombrées (HALS).

11. Pièce composite selon la revendication 10, dans laquelle la couche de mousse est poreuse avec une densité supérieure ou égale à 0,17 gramme par centimètre cube et inférieure ou égale à 0,5 gramme par centimètre cube, et dans laquelle la densité de la couche de mousse est inférieure à celle de la couche de revêtement.

12. Pièce composite selon la revendication 10 ou 11, dans laquelle :
(1) la couche de revêtement et la couche de mousse comprennent chacune la composition à base de PVC et la couche de revêtement présente une densité supérieure ou égale à 1,15 gramme par centimètre cube à inférieure ou égale à 1,2 gramme par centimètre cube ; ou
(2) la couche de revêtement et la couche de mousse comprennent chacune la composition à base de TPO et la couche de revêtement présente une densité supérieure ou égale à 0,89 gramme par centimètre cube à inférieure ou égale à 0,92 gramme par centimètre cube.

13. Pièce composite selon l'une quelconque des revendications 10 à 12, dans laquelle la résistance de liaison entre la couche de revêtement et la couche de mousse est supérieure à 40 Newtons par centimètre, telle que mesurée par un essai de pelage à 90° sur une machine d'essais de traction-compression.
